# EUROPÄISCHE PATENTANMELDUNG

(11) **EP 4 316 686 A1**
(43) Veröffentlichungstag der Anmeldung: **07.02.2024**
(21) Anmeldenummer: 22188423.2
(22) Anmeldetag: 03.08.2022
(51) Int. Cl.: B21H 3/02, B21K 1/56, B21K 25/00, B21J 13/02, B21J 9/02, F16B 25/00, F16B 13/00

(54) **VERFAHREN UND VORRICHTUNG ZUM FÜGEN EINES SCHRAUBENKÖRPERS EINER BETONSCHRAUBE**

(71) Anmelder: Hilti Aktiengesellschaft, 9494 Schaan (LI)
(72) Erfinder: Gebauer, Christian, 9450 Altstätten (CH); Domani, Guenter, 88138 Weissensberg (DE); Zielbauer, Florian, 9464 Rüthi (CH)
(74) Vertreter: Hilti Aktiengesellschaft Corporate Intellectual Property

(57) **Zusammenfassung**

Die Erfindung betrifft ein Verfahren und eine Vorrichtung zum Fügen eines aus mehreren Bauteilen bestehenden Schraubenkörpers (1) einer Betonschraube, gemäß den nachfolgenden Herstellungsschritten: Bereitstellen (A) eines aus einem Stahlmaterial bestehenden zylindrischen Schaftrohlings (2); Einformen (B) einer Helixnut (4) in die Mantelfläche des zylindrischen Schaftrohlings (2); Montieren (C) eines die Gewindegänge schaffenden Helixbauteils (6) durch Einschrauben in die eingeformte Helixnut (4) des Schaftrohlings (2); Fixieren (D) des Helixbauteils (6) in der Helixnut (4) mittels mindestens eines Umformschritts, bei welchem Material des Schaftrohlings (2) im Bereich der Helixnut (4) in Richtung des Helixbauteils (6) derart verdrängt wird, dass dieses das Helixbauteil (6) im Nutbereich teilweise umgreift, um eine kombiniert form- und kraftschlüssige Bauteilverbindung zu schaffen.

Die Erfindung betrifft auch eine Vorrichtung zur Durchführung des Verfahrens.

## Beschreibung

Die Erfindung betrifft ein Verfahren zum Fügen eines aus mehreren Bauteilen bestehenden Schraubenkörpers einer Betonschraube, ausgehend von einem Bereitstellen A eines aus einem Stahlmaterial bestehenden zylindrischen Schaftrohlings, einem nachfolgenden Einformen B einer Helixnut in die Mantelfläche des zylindrischen Schaftrohlings, wonach ein Montieren C eines die Gewindegänge schaffenden Helixbauteils durch Einschrauben in die zuvor eingeformte Helixnut des Schaftrohlings durchgeführt wird, welches anschließend in seiner Sollposition fixiert wird. Außerdem betrifft die Erfindung auch eine Vorrichtung zur Durchführung eines diese Montageschritte umfassenden Herstellungsverfahrens.

### Technisches Gebiet

Als Betonschraube der hier interessierenden Art wird ein Schraubbefestigungsmittel angesehen, welches einen - auf die gewünschte Einschraubtiefe oder die geometrischen Dimensionen der lösbar miteinander zu verbindenden Bauteile in der Länge abgestimmten - Schaft aufweist, an dessen zylindrischer Mantelfläche ein Außengewinde angeordnet ist, mit welchem in einen mineralischen Ankergrund, insbesondere Beton, ein Innengewinde eingeschnitten werden kann. Hierzu weist das spezielle Außengewinde zumindest abschnittsweise eine Härte und Festigkeit auf, die das Einschneiden in den gewöhnlich harten mineralischen Ankergrund gestattet. Mit der Betonschraube kann dann unmittelbar ein Anbauteil, beispielsweise eine Stahlkonsole, am Ankergrund befestigt werden. Um das bauteilcharakteristische direkte Einschneiden des Innengewindes in vorzugsweise Beton zu realisieren, bestehen derartige Betonschrauben üblicherweise aus einem gehärteten Kohlenstoffstahl.

Wird eine Betonschraube allerdings im Außenbereich eingesetzt, besteht das Risiko, dass ein aus herkömmlichem Kohlenstoffstahl gefertigtes Verbindungsmittel über die Nutzungszeit in einem unzulässig großen Ausmaß korrodiert.

### Stand der Technik

Aus dem allgemein bekannten Stand der Technik gehen für den vorgenannten, spezifischen Einsatzzweck daher Betonschrauben hervor, bei denen der Schaft und ein Teil des Außengewindes aus einem korrosionsbeständigen Werkstoff hergestellt sind. Allerdings besteht für den hier interessierenden Einsatzzweck auch die Anforderung, dass die Betonschraube ein Einschneiden in Armierungseisen von Stahl-Beton gewährleisten muss. Mangels notwendiger Festigkeit des Außengewindes ist dies bei korrosionsbeständigen Betonschrauben jedoch problematisch. Daher wird aktuell auf Konstruktionskonzepte zurückgegriffen, bei denen ein Teil des Außengewindes aus einem gehärteten Kohlenstoffstahl oder sogar Hartmetall besteht, was jedoch einen entsprechend hohen Herstellungsaufwand verursacht.

In der WO 2009/033637 A1 ist ein gattungsgemäß aus mehreren Bauteilen gefügter Schraubenkörper einer Betonschraube beschrieben. Diese besitzt einen Schaft aus einem korrosionsbeständigen Werkstoff. Das Außengewinde besteht dagegen aus einem hier als Wendel bezeichneten separaten Helixbauteil, das mit dem Schaft formschlüssig verbunden wird. Die formschlüssige Verbindung wird dadurch erreicht, dass das Helixbauteil oder der Schaft mit in regelmäßigen Abständen beabstandet zueinander angeordneten Ausnehmungen und der Schaft bzw. das Helixbauteil mit dazu passenden Vorsprüngen versehen sind, welche in die Ausnehmungen einrastbar sind. Die vorderen Windungen des Helixbauteils dienen im montierten Zustand als Vorgewindebereich zum Einschneiden des Innengewindes in eine vorgefertigte Bohrlochwandung. Dieser als Schneidabschnitt fungierende Vorgewindebereich besteht aus einem nicht-korrosionsbeständigen, gehärteten Kohlenstoffstahl mit einer zum Einschneiden in die Bohrlochwandung hinreichenden Härte und Festigkeit. Der nachfolgende Bereich des Helixbauteils ist dagegen aus einem korrosionsbeständigen Federstahl hergestellt, welcher im Gegensatz zum Vorgewindebereich vornehmlich als Tragabschnitt dient. Die Materialkombination dieser technischen Lösung bedarf ebenfalls eines recht hohen Fertigungsaufwands, insbesondere vor dem Hintergrund der bereichsweise unterschiedlichen Materialwahl und Wärmebehandlung des Helixbauteils.

Es ist daher die Aufgabe der vorliegenden Erfindung einen aus mehreren Bauteilen bestehenden Schraubenkörper einer korrosionsbeständigen Betonschraube zu erschaffen, welcher in fertigungstechnisch einfacher Weise und innerhalb einer kurzen Taktzeit in Massenfertigung herstellbar ist.

### Offenbarung der Erfindung

Die Aufgabe wird verfahrenstechnisch durch Anspruch 1 gelöst. Der nebengeordnete Anspruch 13 gibt eine spezielle Vorrichtung zur Durchführung des erfindungsgemäßen Herstellungsverfahrens an. Die je nachfolgenden abhängigen Ansprüche geben vorteilhafte Weiterbildungen der erfindungsgemäßen Lösung wieder.

Die Erfindung schließt die verfahrenstechnische Lehre ein, dass nach einem herkömmlichen Einschrauben eines Helixbauteils ausreichender Härte und Festigkeit in eine zuvor umformtechnisch eingeformte Helixnut eines Schaftrohlings, ein spezielles Fixieren D des Helixbauteils in der Helixnut mittels mindestens eines Umformschritts durchgeführt wird, bei welchem Material des Schaftrohlings im Bereich der Helixnut in Richtung des Helixbauteils derart verdrängt wird, dass dieses das Helixbauteil im Nutbereich teilweise umgreift, um eine kombiniert form- und kraftschlüssige Bauteilverbindung zu schaffen.

Im Unterschied zu dem vorstehend diskutierten Stand der Technik weicht die erfindungsgemäße Lösung von einer rein formschlüssigen Rastverbindung ab und bewirkt mit dem zusätzlichen materialverdrängenden Umformschritt eine kraftschlüssige Verbindungskomponente. Hierdurch wird eine weitaus stabilere Bauteilverbindung erreicht, die nicht allein auf eine Abscherstabilität von einzelnen Materiallaschen in zugeordnete Ausnehmungen angewiesen ist.

Da die erfindungsgemäße Lösung andererseits auch von einer ebenfalls ansonsten üblichen stoffschlüssigen Verbindung der Einzelteile abrückt, welche ein Schweißen oder zumindest Löten erfordert, lässt sich der Fertigungsaufwand erheblich reduzieren, da zur Realisierung lediglich ein Umformwerkzeug, vorzugsweise ein Folgeverbundwerkzeug mit den hierin implementierten Verfahrensschritten, eingesetzt werden kann.

Vorzugsweise umfasst der mindestens eine Umformschritt zum Fixieren D des Helixbauteils in der Helixnut einen Querfließpressschritt. Dieser bewirkt insbesondere die erfindungsspezifische Verdrängung von Material des Schaftrohlings im Bereich der Helixnut in Richtung des Helixbauteils. Dies gewährleistet dann auch eine Kraftübertragung zwischen beiden metallischen Bauteilen während des Setzvorgangs der Betonschraube. Zusätzlich wird die hierfür erforderliche Schließbewegung der Werkzeugkavität eines Querfließpress-Werkzeugs oder -werkzeugteils dazu genutzt, dass das eine Ende des Helixbauteils in die Tiefe der Spitzenprägung positioniert wird. Im nächsten Moment erfolgt dann das eigentliche Fügen des Helixbauteils mit dem Schaft. Das Volumen des Schaftmaterials, welches beim Querfließpressen verdrängt wird, wird durch die zylindrische Form und Länge der Schraubenspitze sichergestellt. Mit anderen Worten ist das vorzugsweise Querfließpressen für das Fügen der Schraubenhelix mit dem Schaft im Spitzenbereich des Schraubenkörpers zuständig. Dabei wird Schaftmaterial von der Spitze in axialer Richtung zur Helixnut verschoben.

Optional kann dabei am distalen Ende des Schaftrohlings auch ein Vorgewindebereich ausgebildet werden. Dieser kann zum einen eine sich an die Helixnut anschließende Helixnutvertiefung zur Aufnahme des distalen Endbereichs des Helixbauteils umfassen, in welche dieser durch Einpressen fixiert wird. Die Helixnutvertiefung kann beispielsweise durch Prägen erzeugt werden, welches vor dem Querfließpressen durchgeführt wird. Zum anderen kann der Vorgewindebereich als Übergang zum Gewinde des Helixbauteils auch mit einem angeformten Einlaufgewinde versehen werden. Das Einlaufgewinde kann im Zuge des Querfließpressens aus dem Schaftmaterial mit erzeugt werden.

Gemäß einer die Erfindung weiter verbesserden Maßnahme kann der mindestens eine Umformschritt zum Fixieren D des Helixbauteils in der Helixnut einen Prägeschritt mit umfassen, bei dem das Material im Bereich der Helixnut in Richtung des Helixbauteils verdrängt wird. Vorzugsweise lässt sich durch dieses kombinierte Prägen eine dahingehende Materialverdrängung bezüglich der Helixnut erzielen, bei welcher Werkstoff im Bereich der Helixnut auf den Flankenbereich des Helixbauteils und auch in optionale seitliche Aussparungen im Flankenbereich des Helixkörpers hinein bewirkt, was zu einer weiteren Stabilitätserhöhung der Bauteilverbindung sorgt. Dieser zusätzliche oder zum Querfließpressen überlagerte Prägeschritt ist mit anderen Worten zuständig für das Fügen des Helixbauteils mit dem Schaft über die gesamte Länge des Helixbauteils.

Daher wird vorgeschlagen, einen zusätzlichen Prägeschritt nach dem Querfließpressen oder möglichst gleichzeitig hierzu durchzuführen. Bei einer gleichzeitigen Durchführung wird in einem einzigen Werkzeughub sowohl das Querfließpressen als auch das zusätzliche Prägen im vorstehend beschriebenen Sinne durchgeführt.

Alternativ hierzu ist es jedoch auch möglich, dass zum Fixieren D im Zuge eines einzigen, als Querfließpressschritt ausgeführten Umformschritts der Vorgewindebereich als Einlaufgewinde geformt - soweit gewünscht - sowie auch das Material im Bereich der Helixnut in Richtung des Helixbauteils verdrängt wird. Bei der Massivumformung eines Querfließpressens wird während der gesamten Prozesszeit eine aktiv wirkende Schließkraft auf die Werkzeugkavität aufgebracht. Anschließend wird durch eine axial wirkende Stempelkraft der Werkstückwerkstoff radial nach außen verschoben. Das Material fließt infolgedessen quer zur Stempelrichtung.

Bei der hier beschriebenen erfindungsgemäßen Lösung wird durch das Querfließpressen ein Ende des Helixbauteils form- und kraftschlüssig mit dem distalen Ende des Schafts gefügt. Hierdurch ist eine Kraftübertragung zwischen den beiden metallischen Körpern, auch während des Setzvorgangs der Betonschraube gewährleistet. Zusätzlich kann die Schließbewegung der Werkzeugkavität auch dazu genutzt werden, dass das Ende des Helixbauteils in die Tiefe der Spitzenprägung - falls durchgeführt - positioniert wird. Im nächsten Moment erfolgt dann das vorstehend beschriebene Fügen des Helixbauteils mit dem Schaft.

Gemäß einer weiteren die Erfindung verbessernden Maßnahme wird vorgeschlagen, dass der bereitgestellte Schaftrohling aus einem Rundstahl als Halbzeug durch Fließpressen vorgefertigt wird. Dabei kann bereits ein geeigneter Schraubenkopf zum Werkzeugeingriff mit angeformt werden. Es ist jedoch auch möglich, einen Schraubenkopf mit an sich bekannter Geometrie als Außensechskant, Innensechskant, TORX oder dergleichen, auch im Zuge eines späteren Verfahrensschritts oder separat anzuformen.

Zusätzlich sei darauf hingewiesen, dass der Verfahrensschritt des Einformens B der Helixnut in den zylindrischen Schaftrohling durch ein Umformverfahren erfolgen kann, das ausgewählt ist aus einer bevorzugten Gruppe von Kaltumformverfahren, umfassend Fließpressen, Kaltwalzen und radiales Prägen. Durch das prinzipielle Kaltumformen findet eine vorteilhafte Werkstoffverfestigung im Nutbereich statt, was der Stabilität der späteren form- und kraftschlüssigen Bauteilverbindung zugutekommt. Die Helixnut kann im Rahmen der formschlüssigen Verbindungskomponente einen trapezförmigen, rechteckförmigen oder U-förmigen Nutquerschnitt besitzen. Die Querschnittsform richtet sich dabei auch danach, dass das hierfür verwendete Stempelwerkzeug bezüglich der Nut wieder entformbar sein muss. Im Rahmen eines Kaltwalzens kann beispielsweise ein Flachbacken- oder Rollwalzen zu Einsatz kommen. Bei einem alternativen radialen Prägen wird die Kontur eines Prägewerkzeugs mehrfach entlang des Umfangs des Schaftrohlings in dessen Mantelfläche radial hineingeprägt. Generell entfällt hierdurch eine ansonsten übliche und aufwändigere spanende Fertigung.

In diesem Zusammenhang sei darauf hingewiesen, dass der Schritt des Einformens der Helixnut auch ein Prägen eines optionalen Vorgewindebereichs am distalen Ende des Schaftrohlings mit beinhalten kann. Ziel ist es dabei, durch eine geeignete Prägekontur einen Startpunkt für das Helixbauteil zu erzeugen. Dabei hat der Vorgewindebereich eine definierte Tiefe und definierte Länge über einen definierten Gewindeanstiegswinkel hinweg. Der Übergang zum gewalzten oder geprägten Nutdurchmesser der Helixnut wird dabei tangential durch das Prägen erzeugt.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: ein schematisches Ablaufdiagramm der Schrittreihenfolge des erfindungsgemäßen Herstellungsverfahrens,
- Fig. 2: eine Seitenansicht eines zylindrischen Schaftrohlings mit hieran bereits angeformtem Schraubenkopf,
- Fig. 3: eine Seitenansicht einer in den Schaftrohling gemäß Fig. 1 eingeformten Helixnut,
- Fig. 4: eine Seitenansicht auf den Schaftrohling mit zusätzlich geprägtem Vorgewindebereich,
- Fig. 4a: ein Detail Y des Vorgewindebereichs aus Fig. 4,
- Fig. 5: eine Seitenansicht auf den Schraubenkörper mit vormontiertem Helixbauteil,
- Fig. 6: eine Seitenansicht auf den Schraubenkörper mit durch Querfließpressen fixiertem Helixbauteil,
- Fig. 6a: ein Detail W der querfließgepressten Bauteilverbindung nach Fig. 6,
- Fig. 7: eine Seitenansicht auf den Schraubenkörper mit zusätzlichem Prägeschritt im Rahmen des Fixierens des Helixbauteils,
- Fig. 7a: ein Detail V der zusätzlich geprägten Bauteilverbindung nach Fig. 7,
- Fig. 8: eine schematische Darstellung eines Werkzeugkonzepts zum Querfließpressen für das Fixieren des Helixbauteils am Schraubenkörper,
- Fig. 9: eine schematische Darstellung eines Werkzeugkonzepts zum zusätzlichen Prägen des Schafts im Rahmen des Fixierens des Helixbauteils am Schraubenkörper,
- Fig. 10: eine schematische Darstellung eines Werkzeugkonzepts zum optionalen zusätzlichen Prägen des Vorgewindebereichs.

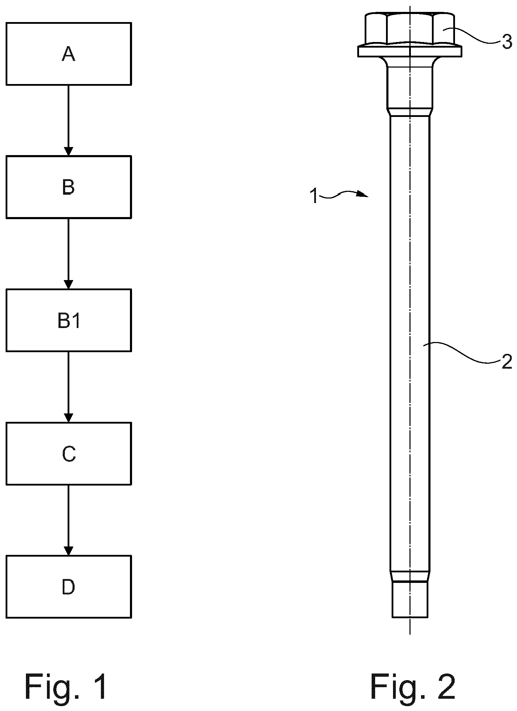

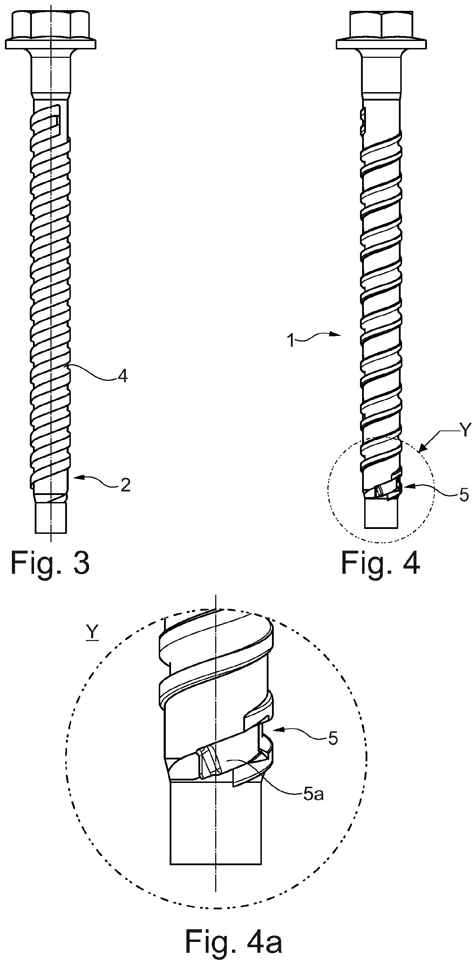

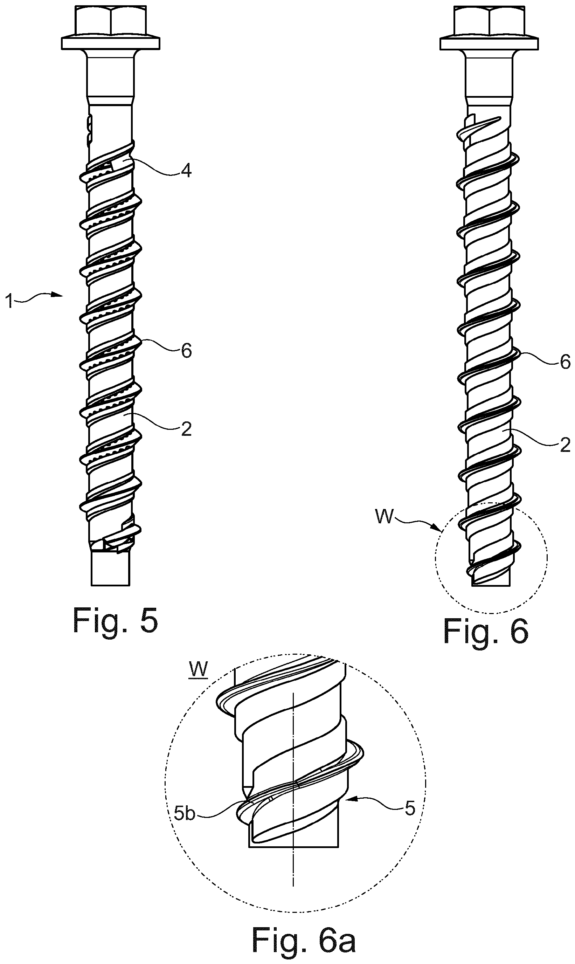

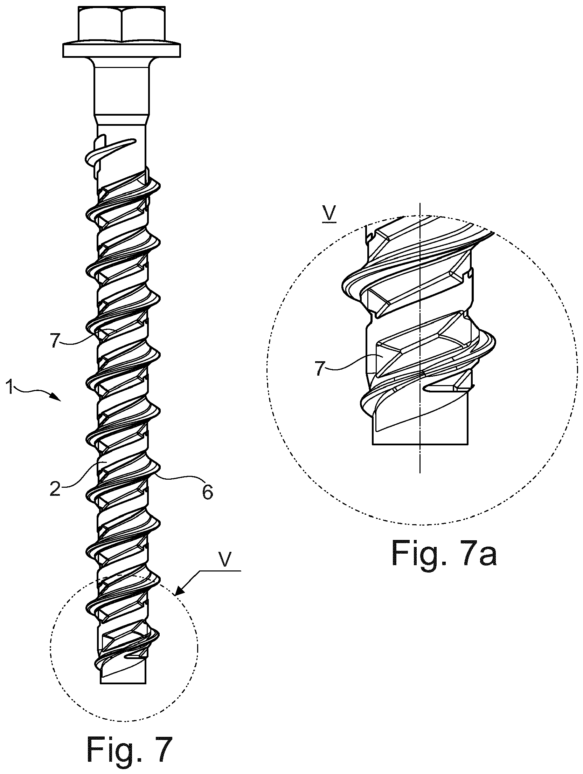

Gemäß Fig. 1 geht das erfindungsgemäße Herstellungsverfahren zunächst von einem Bereitstellen A eines aus einem Stahlmaterial bestehenden zylindrischen Schaftrohlings (Fig. 2) aus, worin ein Einformen B einer Helixnut in die Mantelfläche (Fig. 3) durchgeführt wird. In diesem Zusammenhang wird bei diesem Ausführungsbeispiel auch ein Zwischenschritt B1 durchgeführt, bei welchem seitens des distalen Endes des Schaftrohlings eine Helixnutvertiefung durch Prägen erzeugt wird (Fig. 4). Anschließend erfolgt ein Montieren C eines die Gewindegänge schaffenden Helixbauteils durch Einschrauben in die eingeformte Helixnut des Schaftrohlings (Fig. 5). Im Rahmen eines finalen form- und kraftschlüssigen Fixierens D des Helixbauteils in der Helixnut wird umformtechnisch durch Querfließpressen Material des Schaftrohlings im Bereich der Helixnut in Richtung des Helixbauteils verdrängt (Fig. 6). Das Fixieren D umfasst hier außerdem einen Prägeschritt, bei dem ebenfalls Material im Bereich der Helixnut in Richtung des Helixbauteils verdrängt wird (Fig. 7).

Gemäß Fig. 2 besteht der Schraubenkörper 1 einer herzustellenden Betonschraube im Ausgangszustand aus einem Schaftrohling 2, welcher aus einem Rundstahl als Halbzeug durch Fließpressen gefertigt ist. Am proximalen Ende des Schaftrohlings 2 ist ein Schraubenkopf 3 angeformt, der bei diesem Ausführungsbeispiel einen hexagonalen Schraubantrieb gewährleistet.

Ergänzend sei darauf hingewiesen, dass der zylindrische Schaftrohling 2 mehrere Bereiche unterschiedlichen Durchmessers aufweist, von denen der benachbart zum Schraubenkopf 3 angeordnete größte Schaftdurchmesser als Unterkopfdurchmesser dient und der am distalen Ende des Schaftrohlings 2 angeordnete kleinste Durchmesser so dimensioniert ist, dass die spätere Montage des Helixbauteils durch ein Aufschrauben gewährleistet werden kann. Außerdem wird das Materialvolumen dieses kleinsten Durchmesserbereichs des Schaftrohlings 2 beim späteren Herstellungsschritt des Querfließpressens zum Ausformen der Schraubenspitze benötigt.

Nach Fig. 3 wird im nächsten Herstellungsschritt das Einformen B einer Helixnut 4 in die Mantelfläche des zylindrischen Schaftrohlings 2 durch beispielsweise Kaltwalzen im Bereich des mittleren Schaftdurchmessers durchgeführt. Die eingewalzte Helixnut 4 ist mit einem trapezförmigen Nutquerschnitt versehen.

Gemäß Fig. 4 wird im Zusammenhang damit am distalen Ende des Schaftrohlings 2 ein Vorgewindebereich 5 erzeugt. Aus dem Detail Y gemäß Fig. 4a geht die Formgebung des Vorgewindebereichs 5 hervor, der mit einer sich an die Helixnut anschließenden Helixnutvertiefung 5a zur Aufnahme des distalen Endbereichs eines nachfolgend detaillierter beschriebenen Helixbauteils versehen ist. Die Helixnutvertiefung 5a ist eine durch Prägen gebildete lokale Vertiefung der Helixnut. Ziel ist es, durch die erzeugte Prägekontur einen Startpunkt für das anschließend zu montierende Helixbauteil zu schaffen. Dabei hat die Prägestelle eine definierte Tiefe und Länge über einen definierten Gewindeanstiegswinkel hinweg, wie dargestellt. Der Übergang zu dem bei diesem Ausführungsbeispiel kaltgewalzten Nutdurchmesser wird dabei tangential durch das Prägen erzeugt.

Nach Fig. 5 wird im anschließenden Herstellungsschritt das bereits vorstehend erwähnte Helixbauteil 6 durch Einschrauben in die eingeformte Helixnut 4 zur Vervollständigung des Schraubenkörpers 1 eingebracht. Das aus einem korrosionsbeständigen Stahlmaterial bestehende Helixbauteil 6 bildet dabei die Gewindegänge der Betonschraube.

Nach Fig. 6 wird das durch Einschrauben vormontierte Helixbauteil 6 anschließend in seiner Solllage dadurch am Schraubenkörper 1 umformtechnisch fixiert, indem Material des Schaftrohlings 2 im Bereich der - hier durch das Helixbauteil 6 verdeckten - Helixnut 4 in Richtung des Helixbauteils 6 durch Querfließpressen verdrängt wird. Das Detail W in Fig. 6a illustriert das distale Ende des Schraubenkörpers 1 nach dem Querfließpressen. Hierbei wird im Zuge des Querfließpressens im Vorgewindebereich 5 aus dem Schaftmaterial ein Einlaufgewinde 5b als Übergang zum Gewinde des Helixbauteils 6 angeformt.

Hinsichtlich Fig. 7 wird bei diesem Ausführungsbeispiel ein zusätzlicher Prägeschritt ausgeführt, bei dem randseitig der - hier durch das Helixbauteil 6 verdeckten - Helixnut 4 ein Prägeeindruck 7 erzeugt wird, welcher im Detail V der Fig. 7a deutlicher hervorgeht. Der Prägeeindruck 7 läuft dabei beidseitig benachbart zur Helixnut 4 und wird durch die einzelnen beabstandet zueinander benachbarten Prägeeindrücke 7 mittels eines geeigneten Prägewerkzeugs realisiert, das den Werkstoff des Schaftrohlings 2 in seitliche - hier nicht erkennbare - Aussparungen des Helixbauteils 6 zur Erhöhung der Verbindungsstabilität drückt.

Es sei ergänzend darauf hingewiesen, dass die Prägekontur durch den Umformprozess entlang der gesamten Länge des Helixbauteils in hier mehreren Prägezonen erzeugt wird, wobei diese eine besondere Charakteristik aufweisen. Denn zwischen den einzelnen Prägezonen bildet sich je eine Materialaufhäufung, welche eine Art Brücke bildet.

Die vorstehend beschriebenen Fertigungsschritte können in einzelnen Werkzeugen oder - vorzugsweise - in einem Folgeverbundwerkzeug ausgeführt werden, in welchem die nachstehend einzeln beschriebenen Werkzeugkavitäten enthalten sind.

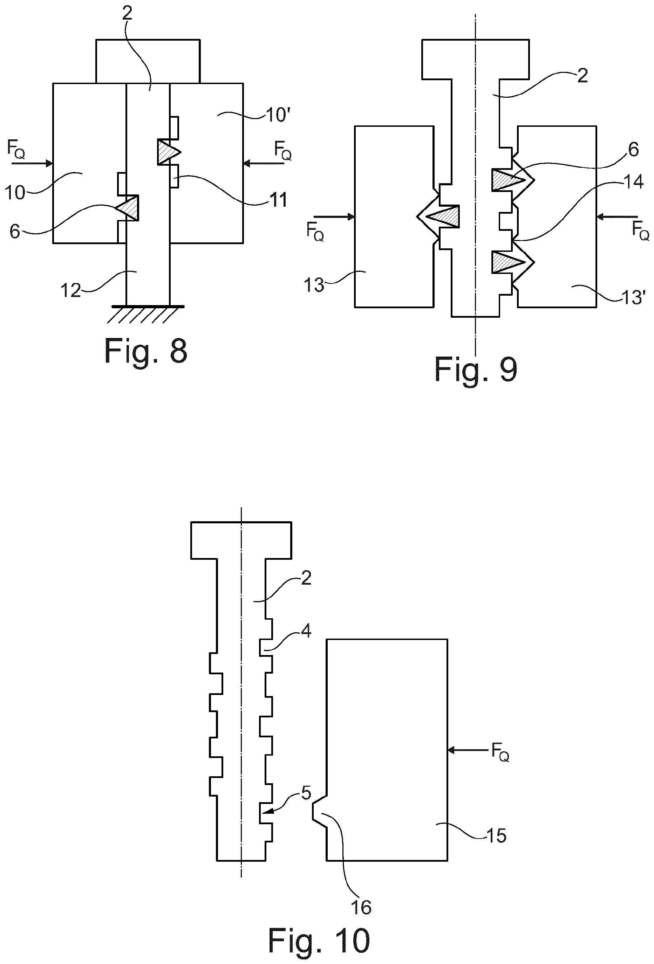

Die Fig. 8 stellt schematisch eine erste Werkzeugkavität für einen hierin eingelegten Schaftrohling 2 zum Querfließpressen im Rahmen des Fixierens D dar. Hierfür weist eine Querfließpressmatritze 10, 10' eine wendelförmige Nut 11, passend zum Verlauf des in den Schaftrohling 2 eingelegten Helixbauteils 6 auf. Die Querfließpressmatritze 10, 10' wird mit einer Querschließkraft F_{Q} betätigen. Mit einem seitens des distalen Endes axial den Schaftrohling 2 fixierenden ortsfesten Stempel wird eine axiale Relativbewegung verhindert. Nachdem die Querfließpressmatritze 10, 10', welche den Schaftrohling 2 vollständig umschließt, geschlossen ist, wird durch die Werkzeugkinematik eine Schließkraft auf die Matrize aufgebracht. Im nächsten Teilschritt erfolgt eine axiale Relativbewegung zwischen der geschlossenen Matrize oder dem geschlossenen Matrizenpaket (bei einer mehrteiligen Ausführung) sowie dem umschlossenen Schaftrohling 2 und dem axial fixierten Stempel 12. Hierdurch wird eine Umformung auf das distale Ende des Schraubenrohlings 2 eingeleitet und das umformtechnische Fügen zwischen Helixbauteil 6 mittels Kraftschluss sowie Formschluss sichergestellt.

Bei dem in der Fig. 9 dargestellten optional zusätzlichen Prägeschritt wird zusätzlich Material des Schaftrohlings 2 im benachbarten Randbereich zum Helixbauteil 6 in dessen Richtung verdrängt. Hierzu dienen Prägematrizen 13, 13', welche mit einer dem Verlauf des Helixbauteils 6 angepassten Prägekontur 14 versehen sind. Die Prägematrizen 13, 13' dringen mit einer radialen Kraft F_{Q} in den Werkstoff des Schaftrohlings 2 ein. Dabei ist die Teilung der Prägematrizen 13, 13' so gewählt, dass der Prägeschritt mit maximal zwei Umformstufen alle nötigen Prägestellen erzeugt. Die Auslegung der Prägematrizen 13, 13' wird so gestaltet, dass ein Verformen der Schraubenmittelachse zu jedem Prozesszeitpunkt verhindert wird.

In der Fig. 10 ist schematisch eine weitere Kavität der Vorrichtung zur Durchführung des den beiden vorstehend beschriebenen Fertigungsschritten vorzugsweise vorgelagerten Fertigungsschritt zum optionalen Prägen des distalen Vorgewindebereichs 5 als Helixnutvertiefung 5a am Schaftrohling 2 illustriert. Hierfür weist eine Spitzenprägematrize 15 eine entsprechende Spitzenprägekontur 16 auf, so dass eine radiale Bewegung der Spitzenprägematrize 15 zum separaten Prägen einer optionalen Helixnutvertiefung 5a durchgeführt wird.

Die Erfindung ist nicht beschränkt auf das vorstehend beschriebene exemplarische Ausführungsbeispiel. Es sind vielmehr auch Abwandlungen hiervon denkbar, welche vom Schutzbereich der nachfolgenden Ansprüche mit umfasst sind. So ist es beispielsweise auch möglich, auf die Formgebung eines Vorgewindebereichs 5 zu verzichten oder diesen - falls gewünscht - im Zuge eines einzelnen, als Querfließpressschritt ausgeführten Umformschritts zu realisieren.

### Bezugszeichenliste

- 1: Schraubenkörper
- 2: Schaftrohling
- 3: Schraubenkopf
- 4: Helixnut
- 5: Vorgewindebereich
- 5a: Helixnutvertiefung
- 5b: Einlaufgewinde
- 6: Helixbauteil
- 7: Prägeeindruck

- 10: Querfließpressmatritze
- 11: wendelförmige Nut
- 12: Stempel
- 13: Prägematritze
- 14: Prägekontur
- 15: Prägematritze
- 16: Spitzenprägekontur

## Patentansprüche

1. Verfahren zum Fügen eines aus mehreren Bauteilen bestehenden Schraubenkörpers (1) einer Betonschraube, gemäß den nachfolgenden Herstellungsschritten:
- Bereitstellen (A) eines aus einem Stahlmaterial bestehenden zylindrischen Schaftrohlings (2);
- Einformen (B) einer Helixnut (4) in die Mantelfläche des zylindrischen Schaftrohlings (2);
- Montieren (C) eines die Gewindegänge schaffenden Helixbauteils (6) durch Einschrauben in die eingeformte Helixnut (4) des Schaftrohlings (2); **gekennzeichnet durch:**
- Fixieren (D) des Helixbauteils (6) in der Helixnut (4) mittels mindestens eines Umformschritts, bei welchem Material des Schaftrohlings (2) im Bereich der Helixnut (4) in Richtung des Helixbauteils (6) derart verdrängt wird, dass dieses das Helixbauteil (6) im Nutbereich teilweise umgreift, um eine kombiniert form- und kraftschlüssige Bauteilverbindung zu schaffen.

2. Verfahren nach Anspruch 1,
**dadurch gekennzeichnet, dass** der mindestens eine Umformschritt zum Fixieren (D) des Helixbauteils (6) in der Helixnut (4) einen Querfließpressschritt mit umfasst.

3. Verfahren nach Anspruch 1 oder 2,
**dadurch gekennzeichnet, dass** am distalen Ende des Schaftrohlings (2) ein Vorgewindebereich (5) mit einer sich an die Helixnut (4) anschließenden Helixnutvertiefung (5a) zur Aufnahme des distalen Endbereichs des Helixbauteils (6) eingeformt wird.

4. Verfahren nach Anspruch 1,
**dadurch gekennzeichnet, dass** der mindestens eine Umformschritt zum Fixieren (D) des Helixbauteils (6) in der Helixnut (4) einen Prägeschritt mit umfasst, bei dem das Material im Bereich der Helixnut (4) in Richtung des Helixbauteils (6) verdrängt wird.

5. Verfahren nach Anspruch 4,
**dadurch gekennzeichnet, dass** durch das Prägen eine derartige Materialverdrängung erfolgt, die zum einen Werkstoff im Bereich der Helixnut (4) auf den Flankenbereich des Helixbauteils (6) und zum anderen den Werkstoff in seitliche Aussparungen am Flankenbereich verschiebt.

6. Verfahren nach Anspruch 4,
**dadurch gekennzeichnet, dass** der Prägeschritt nach dem Querfließpressschritt oder gleichzeitig hierzu durchgeführt wird.

7. Verfahren nach Anspruch 3,
**dadurch gekennzeichnet, dass** beim Fixieren (D) im Zuge eines einzigen, als Querfließpressschritt ausgeführten Umformschritts im Vorgewindebereich (5) ein Einlaufgewinde (5b) als Übergang zum Gewinde des Helixbauteils (6) angeformt wird sowie auch das Material im Bereich der Helixnut (4) in Richtung des Helixbauteils (6) verdrängt wird.

8. Verfahren nach Anspruch 1,
**dadurch gekennzeichnet, dass** vor dem Schritt des Bereitstellens (A) der Schaftrohling (2) aus einem Rundstahl als Halbzeug durch Fließpressen gefertigt wird.

9. Verfahren nach Anspruch 1,
**dadurch gekennzeichnet, dass** das Einformen (B) der Helixnut (4) in den zylindrischen Schaftrohling (2) durch ein Umformverfahren erfolgt, das ausgewählt ist aus einer Gruppe von Kaltumformverfahren, umfassend Fließpressen, Kaltwalzen, radiales Prägen.

10. Verfahren nach Anspruch 9,
**dadurch gekennzeichnet, dass** die Helixnut (4) mit einem trapezförmigen, rechteckförmigen oder U-förmigen Nutquerschnitt versehen wird.

11. Verfahren nach Anspruch 1,
**dadurch gekennzeichnet, dass** nach dem Schritt des Einformens (B) der Helixnut (4) als Zwischenschritt (B1) am distalen Ende des Schaftrohlings (2) eine Helixnutvertiefung 5a durch Prägen erzeugt wird.

12. Verfahren nach einem der vorstehenden Ansprüche,
**dadurch gekennzeichnet, dass** an dem dem Vorgewindebereich (5) gegenüberliegenden Ende des Schraubenkörpers (1) ein Schraubenkopf (3) zum Werkzeugeingriff angeformt wird.

13. Vorrichtung zur Durchführung des Verfahrens nach Anspruch 5, umfassend eine erste schließbare Werkzeugkavität zum Querfließpressen des Schaftrohlings (2) sowie mindestens eine weitere Werkzeugkavität zum zusätzlichen Prägen des Schaftrohlings (2) für die kombiniert form- und kraftschlüssige Bauteilverbindung mit dem Helixbauteil (6).

14. Vorrichtung nach Anspruch 13,
**dadurch gekennzeichnet, dass** diese als ein Folgeverbundwerkzeug ausgeführt ist.
